# EUROPEAN PATENT APPLICATION

(11) **EP 4 411 754 A1**
(43) Date of publication of application: **07.08.2024**
(21) Application number: 22876024.5
(22) Date of filing: 22.09.2022
(51) Int. Cl.: G21K 1/06, H05G 1/00

(54) **SHAPE-VARIABLE MIRROR AND X-RAY DEVICE**

(30) Priority: 01.10.2021 JP 2021163085
(71) Applicant: National University Corporation Tokai National Higher Education and Research System, Nagoya-shi, Aichi 464-8601 (JP)
(72) Inventor: MATSUYAMA, Satoshi, Nagoya-shi Aichi 464-8601 (JP)
(74) Representative: Seemann & Partner Patentanwälte mbB
(86) International application number: PCT/JP2022/035337
(87) International publication number: WO 2023/054157

(57) **Abstract**

A deformable mirror (10) comprises: a first substrate (14) having a first surface (24) and a second surface (26) opposite to the first surface (24) and made of a piezoelectric material; a reflecting electrode (18) provided in the first surface (24) and having a reflecting surface (12) on which an X-ray (40) is obliquely incident; a plurality of control electrodes (20a) to (20h) arranged at intervals in a predetermined direction in the second surface (26); and a power supply (22) structured to apply a voltage between the reflecting electrode (18) and the plurality of control electrodes (20a) to (20h).

## Description

### TECHNICAL FIELD

### (CROSS-REFERENCE TO RELATED APPLICATIONS)

This application claims priority for Japanese Patent Application No. 2021-163085 filed on October 1, 2021, and the entirety thereof is incorporated herein by reference.

### (TECHNICAL FIELD)

The present disclosure relates to a deformable mirror and an X-ray device.

### BACKGROUND ART

A technique for analyzing X-ray is widely used in academic fields and industrial societies. In recent years, the development of X-ray microscopes has progressed rapidly, and it has been reported that a resolution of 50 nm or less is achieved. Since X-rays have a wavelength extremely shorter than that of visible light, it is expected to achieve a resolution of 1 nm or less in principle. In order to further improve the resolution of X-ray microscopes, it is essential to improve the performance of an X-ray optics for collecting X-rays or imaging X-rays.

Examples of an optical element used in the X-ray optics include a composite refractive lens using refraction, a Fresnel zone plate using diffraction, and an obliquely-incident total reflection mirror using reflection. Among them, the obliquely-incident total reflection mirror has an advantage that the utilization efficiency of X-rays is high and chromatic aberration is small. Furthermore, as an optics with no coma aberration, there is an Advanced Kirkpatrick-Baez (AKB) mirror optics using four obliquely-incident total reflection mirrors (see, for example, Patent Literature 1). In order to make optical properties of the X-ray optics variable, a deformable mirror in which a piezoelectric element is attached to a total reflection mirror and the shape of the reflecting surface is controlled by the deformation amount of the piezoelectric element, is also used (see, for example, Patent Literature 2.).

### RELATED-ART LITERATURE

### PATENT LITERATURE

Patent Literature 1: JP6478433B
Patent Literature 2: JP2021-21897A

### SUMMARY OF INVENTION

### TECHNICAL PROBLEM

The shape accuracy required for the reflecting surface of an X-ray mirror is extremely severe, and for example, the shape accuracy of approximately 1 nm is required for a mirror size of approximately 100 mm. This is because the wavelength of X-rays is extremely shorter than that of visible light. It is not easy to achieve such shape accuracy even if the most advanced ultra-precision machining technology is applied, and it is necessary to repeat the ultra-high-precision shape measurement and the ultra-precision corrective machining based on the measurement result, and thus, the manufacturing of the X-ray mirror requires a very long period and an increased cost.

The present disclosure has been made in view of such a problem, and one exemplary aim thereof is to provide a technique for precisely adjusting the shape of the reflecting surface of the X-ray mirror.

### SOLUTION TO PROBLEM

A deformable mirror according to one aspect of the present disclosure comprises: a first substrate having a first surface and a second surface opposite to the first surface and made of a piezoelectric material; a reflecting electrode provided in the first surface and having a reflecting surface on which an X-ray is obliquely incident; a plurality of control electrodes arranged at intervals in a predetermined direction in the second surface; and a power supply structured to apply a voltage between the reflecting electrode and the plurality of control electrodes.

Another aspect of the present disclosure is an X-ray device. The X-ray device comprises: an X-ray optics including the deformable mirror according to one aspect of the present disclosure; and an X-ray detector structured to detect an X-ray emitted from the X-ray optics.

Yet another aspect of the present disclosure is an X-ray device. The X-ray device comprises: an X-ray optics including the deformable mirror according to one aspect of the present disclosure; and a sample holder structured to hold a sample to be irradiated with an X-ray emitted from the X-ray optics.

Note that arbitrary combinations of the abovementioned components and mutual replacement of the components and expressions of the present disclosure among methods, systems, or the like are also effective as aspects of the present disclosure.

### ADVANTAGEOUS EFFECTS OF INVENTION

According to the present disclosure, it is possible to precisely adjust a reflecting surface of an X-ray mirror.

### BRIEF DESCRIPTION OF DRAWINGS

[Fig. 1] Fig. 1 is a cross-sectional view schematically illustrating a configuration of a deformable mirror according to an embodiment.
[Fig. 2] Fig. 2 is a top view schematically illustrating the configuration of the deformable mirror according to the embodiment.
[Fig. 3] Fig. 3 is a graph illustrating one example of a deformation amount of a reflecting surface of the deformable mirror.
[Fig. 4] Fig. 4 is a graph illustrating one example of a relation between an applied voltage and a deformation amount of the deformable mirror.
[Fig. 5] Fig. 5 is a cross-sectional view schematically illustrating a configuration of a deformable mirror according to a modification.
[Fig. 6] Fig. 6 is a cross-sectional view schematically illustrating a configuration of a deformable mirror according to a modification.
[Fig. 7] Fig. 7 is a cross-sectional view schematically illustrating a method for supporting the deformable mirror.
[Fig. 8] Fig. 8 is a graph illustrating the time stability of the deformable mirror.
[Fig. 9] Figs. 9(a) and (b) are graphs each illustrating one example of a relation between an applied voltage and a deformation amount of the deformable mirror.
[Fig. 10] Fig. 10 is a graph illustrating one example of a shape error of the reflecting surface of the deformable mirror.
[Fig. 11] Fig. 11 is a perspective view schematically illustrating a configuration of an X-ray microscope according to the embodiment.

### DESCRIPTION OF EMBODIMENTS

Before the present disclosure is described in detail, an outline will be described. The present disclosure relates to an X-ray mirror that reflects an X-ray, and relates to a deformable mirror that variably controls a shape of a reflecting surface using a piezoelectric material. An X-ray optics for focusing X rays or imaging X rays uses a curved mirror having a reflecting surface that is a concave or convex surface. The shape accuracy of the reflecting surface required in the X-ray optics is approximately 1 nm (2 nm in Peak-to-Valley (PV)), and even if the most-advanced ultra-precision machining technology is applied, it is not easy to realize the shape accuracy. An object of the present disclosure is not to achieve the shape accuracy of 1 nm only by machining, but to achieve the shape accuracy of 1 nm by variably controlling the shape of a reflecting surface finished with the shape accuracy of, for example, 2 nm to 5 nm (4 nm to 10 nm in PV) to combine machining and deformation. According to the present disclosure, since the machining accuracy of the reflecting surface can be reduced, the period and cost required for manufacturing the curved mirror can be reduced.

In the present disclosure, it is possible to simplify the structure as well as to control the shape of the reflecting surface more precisely by using the surface itself of the piezoelectric material as the reflecting surface, instead of attaching a piezoelectric element to the X-ray mirror. Further, by deforming the piezoelectric material in a direction perpendicular to the reflecting surface, it is possible to control the shape with a higher spatial frequency. In one example of the present disclosure, a piezoelectric single crystal material such as lithium niobate (LN) or lithium tantalate (LT) is used as a piezoelectric material for deforming the reflecting surface, instead of a piezoelectric ceramic material such as lead zirconate titanate (PZT). By using the piezoelectric single crystal material, the deformation amount can be linearly changed with respect to the applied voltage, and the deformation amount can be stably controlled.

Hereinafter, an embodiment for carrying out the present disclosure will be described in detail with reference to the drawings. Note that, in the description, the same elements are denoted by the same reference numerals, and redundant description thereof will be omitted as appropriate. In addition, in order to help understanding of the description, a dimensional ratio of respective components in each drawing does not necessarily match an actual dimensional ratio.

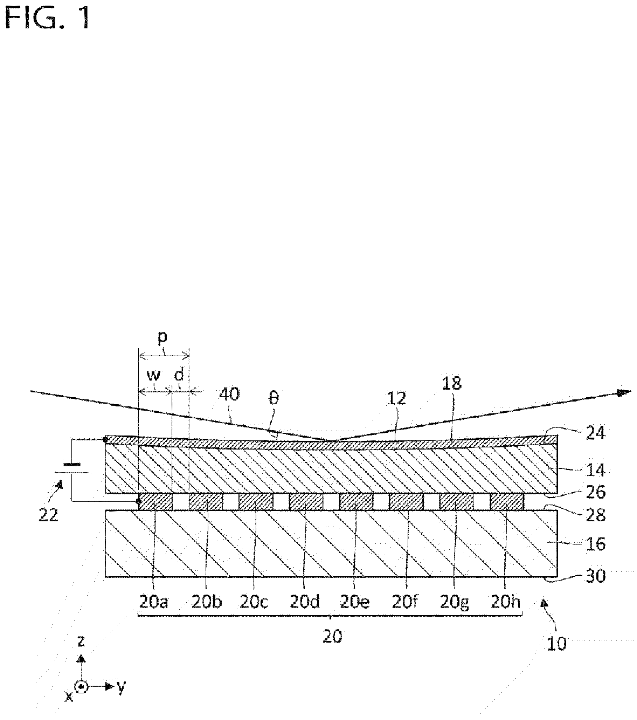

Fig. 1 is a cross-sectional view schematically illustrating a configuration of a deformable mirror 10 according to an embodiment. The deformable mirror 10 has a reflecting surface 12 on which an X-ray 40 is obliquely incident, and is configured such that the shape of the reflecting surface 12 is deformable. The surface roughness (Rms) of the reflecting surface 12 is extremely small, for example, 0.5 nm or less, and preferably 0.2 nm or less. An angle θ between an optical axis of the X-ray 40 and the reflecting surface 12 is very small, for example, approximately 1 to 10 milliradians (mrad). By reducing the surface roughness of the reflecting surface 12 and reducing the incident angle θ of the X-ray 40, the X-ray 40 can be reflected with high efficiency of approximately 80% to 90%.

The deformable mirror 10 includes a first substrate 14, a second substrate 16, a reflecting electrode 18, a plurality of control electrodes 20a, 20b, 20c, 20d, 20e, 20f, 20g, and 20h (also collectively referred to as a control electrode 20), and a power supply 22.

In Fig. 1, a direction orthogonal to both of an incident optical axis and a reflection optical axis of the X-ray 40 that is incident on and reflected by the deformable mirror 10 is defined as an x direction. A thickness direction of the first substrate 14 and the second substrate 16 is defined as a z direction, and a direction orthogonal to both of the x direction and the z direction is defined as a y direction. Note that the illustrated coordinate axes are set to help understanding of the description, and do not limit the orientation of the deformable mirror 10 at the time of use.

The first substrate 14 is made of a piezoelectric material, for example, a piezoelectric single crystal material such as lithium niobate (LN) or lithium tantalate (LT). The first substrate 14 has a first surface 24 and a second surface 26 opposite to the first surface 24. The first surface 24 is provided with a reflecting electrode 18, and the second surface 26 is provided with a plurality of control electrodes 20a to 20h. The first substrate 14 is deformed according to a voltage applied between the reflecting electrode 18 and the plurality of control electrodes 20a to 20h. The first substrate 14 expands and contracts in the thickness direction (z direction) according to a voltage applied in the thickness direction (z direction), and is configured such that the thickness (height) from the second surface 26 to the first surface 24 changes. As the first substrate 14, for example, a 36-degree Y-cut LN substrate can be used. The thickness of the first substrate 14 is, for example, 0.1 mm or more and 10 mm or less, and preferably 0.2 mm or more and 2 mm or less.

The first surface 24 is configured so as to have the shape accuracy and the surface roughness equivalent to those of the reflecting surface 12. The shape accuracy (PV) of the first surface 24 is, for example, 10 nm or less, and preferably 2 nm or more and 5 nm or less. The surface roughness (Rms) of the first surface 24 is, for example, 0.5 nm or less, and preferably 0.05 nm or more and 0.2 nm or less. The shape accuracy and the surface roughness of the first surface 24 can be realized by performing known precision machining such as elastic emission machining (EEM) after rough machining such as cutting and mechanical polishing. The shape of the first surface 24 can be measured by an autocollimator, an X-ray interferometer, a visible light interferometer, a pencil beam method using X-rays, or the like. The first surface 24 is, for example, a convex surface or a concave surface having an arc shape, an elliptic shape, a hyperbolic curve shape, or a parabolic shape, and has a curvature only in one direction (for example, in the y direction). In the example of Fig. 1, the first surface 24 is a concave surface. Note that, the first surface 24 may be a flat surface or a curved surface having curvatures in two directions (for example, the x direction and the y direction). The second surface 26 is, for example, a polished flat surface.

The second substrate 16 is a member for supporting the first substrate 14. The second substrate 16 has a third surface 28 and a fourth surface 30 opposite to the third surface 28. The third surface 28 and the fourth surface 30 are, for example, polished flat surfaces. The third surface 28 is bonded to the plurality of control electrodes 20a to 20h, and is fixed to the first substrate 14 via the plurality of control electrodes 20a to 20h. The fourth surface 30 is fixed to a jig or the like for positioning the deformable mirror 10. A material of the second substrate 16 is not particularly limited. But, it is possible to use, for example, a single crystal material such as silicon, quartz, and sapphire. The material of the second substrate 16 may be the same piezoelectric material as that of the first substrate 14 or may be the same piezoelectric single crystal material as that of the first substrate 14. By using the same material for the first substrate 14 and the second substrate 16, it is possible to suppress deformation of the reflecting surface 12 due to a difference therebetween in the coefficient of thermal expansion caused by different materials. Note, when the thickness of the first substrate 14 is large, for example, when the first substrate 14 has a thickness of 5 mm or more, the deformable mirror 10 may not include the second substrate 16.

The reflecting electrode 18 is provided in the first surface 24 and has the reflecting surface 12 on which the X-ray 40 is obliquely incident. The reflecting electrode 18 has a thickness of, for example, 10 nm or more and 100 nm or less, and preferably has a thickness of 30 nm or more and 70 nm or less. The reflecting electrode 18 is provided, for example, so as to cover the first surface 24 entirely and have a uniform thickness over the entire first surface 24. As the reflecting electrode 18 has a uniform thickness, the reflecting surface 12 has a shape corresponding to the first surface 24, and has the shape accuracy and the surface roughness equivalent to those of the first surface 24. As a material of the reflecting electrode 18, nickel (Ni), chromium (Cr), rhodium (Rh), platinum (Pt), gold (Au), or the like can be used. The reflecting electrode 18 may be configured of a thin metal film of a single material, or may be configured as a laminated body of a plurality of thin metal films formed of different materials. The reflecting electrode 18 may include, for example, an adhesive layer made of Cr, Ti, or the like which comes into contact with the first surface 24, and a reflecting layer made of Rh, Pt, Au, or the like which is formed on the adhesive layer. The reflecting electrode 18 can be formed using a vapor deposition method or a sputtering method.

The reflecting surface 12 may be configured so as to function as a total reflection mirror based on a total reflection phenomenon, or may be configured as a multilayer mirror using Bragg reflection. In a case where the reflecting surface 12 is a multilayer mirror, the reflecting electrode 18 may include a multilayer film obtained by alternately and periodically laminating a plurality of first layers made of a heavy element and a plurality of second layers made of a light element. As the heavy element configuring the first layer, molybdenum (Mo), rhodium (Rh), tungsten (W), platinum (Pt), or the like can be used. As the light element configuring the second layer, beryllium (Be), carbon (C), silicon (Si), or the like can be used. The number of laminated multilayer films is, for example, approximately 10 to 100. The thickness of each of the first layer and the second layer is approximately 1 nm to 10 nm. The reflecting electrode 18 may be configured as a so-called multilayer super mirror, and may be configured such that the cycle length of the multilayer film (the sum of the thicknesses of the first layer and the second layer) changes in a depth direction. That is, at least one of the thickness of each of the plurality of first layers and the thickness of each of the plurality of second layers configuring the multilayer reflecting layer may vary depending on positions in the thickness direction.

The reflecting electrode 18 contains a material having conductivity, and preferably contains a material having high conductivity. In a case where the reflecting electrode 18 is configured of a thin metal film of a single material, it is possible to exhibit the conductivity by the metal material configuring the reflecting electrode 18. When the reflecting electrode 18 is configured as a multilayer mirror, it is possible to provide the multilayer mirror with high conductivity by combining the first layer (for example, W) and the second layer (for example, C) having conductivity. Note that, in a case where the multilayer mirror is configured of a material having low conductivity, for example, in a case where the first layer is tungsten carbide (WC) and the second layer is boron carbide (B₄C), it is possible to provide the reflecting electrode 18 with the conductivity by using a metal material having high conductivity such as Cr as an adhesive layer between the first surface 24 of the first substrate 14 and the multilayer mirror. That is, the conductivity of the adhesive layer may be higher than the conductivity of the reflecting layer. Note that, in a case where the conductivity of the reflecting layer is high, the conductivity of the adhesive layer may be lower than the conductivity of the reflecting layer. That is, the conductivity of the reflecting layer may be higher than the conductivity of the adhesive layer.

The control electrode 20 is provided between the first substrate 14 and the second substrate 16, and is bonded to the second surface 26 and the third surface 28. The plurality of control electrodes 20a to 20h are arranged at intervals in a predetermined direction (for example, in the y direction). Widths w of the plurality of control electrodes 20a to 20h in a predetermined direction (for example, the y direction) are, for example, 0.5 mm or more and 10 mm or less, and preferably 1 mm or more and 6 mm or less. Intervals d among the plurality of control electrodes 20a to 20h in a predetermined direction (for example, the y direction) are, for example, 0.1 mm or more and 5 mm or less, and preferably 0.5 mm or more and 4 mm or less. Pitches p (the total of the width w and the interval d) of the plurality of control electrodes 20a to 20h in a predetermined direction (for example, the y direction) are, for example, 1 mm or more and 15 mm or less, and preferably 1.5 mm or more and 10 mm or less.

The plurality of control electrodes 20a to 20h are configured such that, for example, the width w, the interval d, and the pitch p in a predetermined direction (for example, the y direction) are fixed. At least one of the width w, the interval d, and the pitch p of the plurality of control electrodes 20a to 20h may be configured so as to be different from each other. For example, in a case where the angle θ of the X-ray 40 that is obliquely incident on the reflecting surface 12 varies depending on a place in a predetermined direction (for example, the y direction), the pitches p of the plurality of control electrodes 20a to 20h may be different from each other such that the effective pitch p × θ when viewed from the X-ray 40 is fixed.

The control electrode 20 is made of a metal material, and for example, nickel (Ni), chromium (Cr), copper (Cu), silver (Ag), gold (Au), or the like can be used. The control electrode 20 can be formed by, for example, forming a first metal film in the second surface 26 using a vapor deposition method or a sputtering method, forming a second metal film on the third surface 28, and then bonding the first metal film and the second metal film. The method for bonding the first metal film and the second metal film is not particularly limited, and any metal bonding technique can be used. As one example, a solid phase bonding technique such as normal temperature bonding or diffusion bonding can be used. Alternatively, the first metal film and the second metal film may be bonded by using a binder material such as metal nanoparticles and a conductive adhesive. The thickness of the control electrode 20 is not particularly limited, but is, for example, 100 nm or more and 1000 nm or less.

The power supply 22 applies a DC voltage between the reflecting electrode 18 and the control electrode 20. In order to avoid the complicatedness of the drawing, the power supply 22 is connected to only one control electrode 20a in Fig. 1. However, the power supply 22 is connected to the plurality of control electrodes 20a to 20h, respectively. The power supply 22 is configured so as to independently control voltages respectively applied to the plurality of control electrodes 20a to 20h. The power supply 22 applies a DC voltage which is variable in a range of -1 kV to +1 kV, for example. The power supply 22 variably controls the voltages respectively applied to the plurality of control electrodes 20a to 20h individually to control the deformation amount of the first substrate 14 at the respective positions corresponding to the plurality of control electrodes 20a to 20h, and variably controls the shape of the reflecting surface 12.

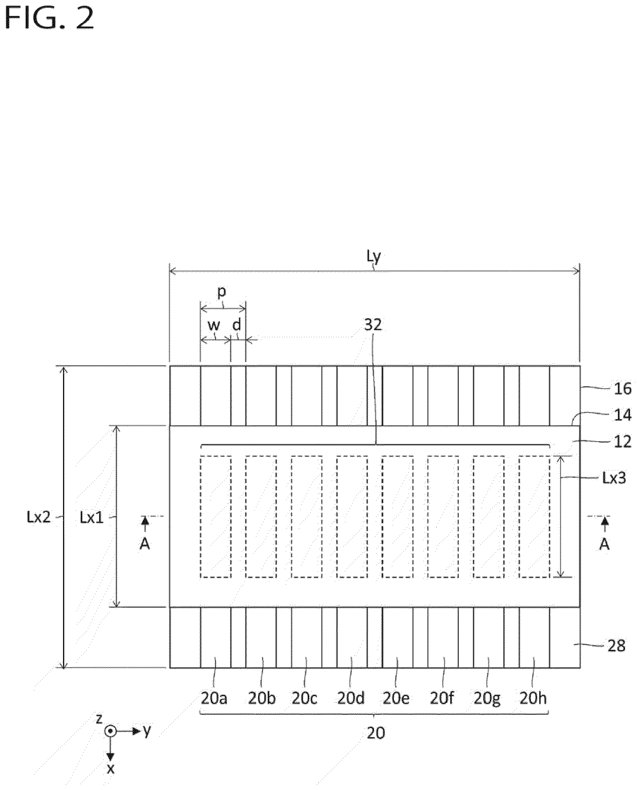

Fig. 2 is a plan view schematically illustrating a configuration of the deformable mirror 10 according to the embodiment. Fig. 1 corresponds to a cross section taken along line A-A in Fig. 2. The first substrate 14 and the second substrate 16 have a rectangular outer shape having long sides in the y direction and short sides in the x direction. A length Lx1, in the x direction, of the first substrate 14 is larger than the beam size of the obliquely incident X-ray 40, and is 5 mm or more and 50 mm or less, for example, and is 10 mm or more and 30 mm or less, for example. A length Ly, in the y direction, of the first substrate 14 is determined according to the beam size and the angle θ of the obliquely incident X-ray 40, and is 20 mm or more and 200 mm or less, for example, and is 50 mm or more and 150 mm or less, for example.

The length Lx2, in the x direction, of the second substrate 16 is larger than the length Lx1, in the x direction, of the first substrate 14, and is 10 mm or more and 100 mm or less, for example. By making the length Lx2, in the x direction, of the second substrate 16 larger than the length Lx1, in the x direction, of the first substrate 14, the control electrode 20 provided on the third surface 28 of the second substrate 16 is exposed so as to facilitate a connection between the power supply 22 and the control electrode 20. The length, in the y direction, of the second substrate 16 is equal to the length Ly, in the y direction, of the first substrate 14. The length, in the y direction, of the second substrate 16 may be larger or smaller than the length Ly, in the y direction, of the first substrate 14.

Each of the plurality of control electrodes 20a to 20h is formed on the third surface 28 to extend in the x direction while forming a belt shape. The lengths, in the x direction, of the plurality of control electrodes 20a to 20h are larger than the length Lx1, in the x direction, of the first substrate 14, and is equal to the length Lx2, in the x direction, of the second substrate 16, for example. The lengths, in the x direction, of the plurality of control electrodes 20a to 20h may be shorter than the length Lx2, in the x direction, of the second substrate 16.

Each of the plurality of control electrodes 20a to 20h is bonded to the first substrate 14 in a bonding region 32 indicated by a broken line in a center portion of the first substrate 14 in Fig. 2. A length Lx3, in the x direction, of the bonding region 32 is smaller than the length Lx1, in the x direction, of the first substrate 14. The length Lx3, in the x direction, of the bonding region 32 is larger than the beam size, in the x direction, of the obliquely incident X-ray 40, and is 3 mm or more and 30 mm or less, for example, and is 5 mm or more and 20 mm or less, for example. The length Lx3, in the x direction, of the bonding region 32 may be equal to the length Lx1, in the x direction, of the first substrate 14.

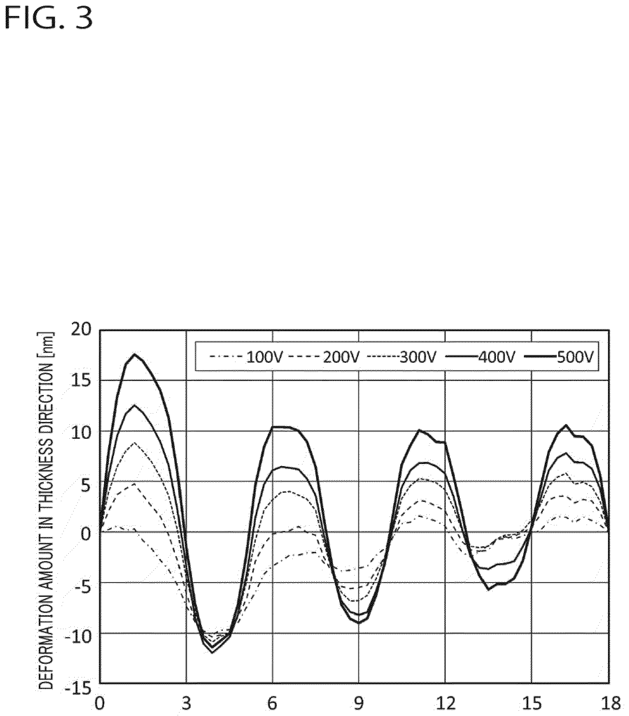

Fig. 3 is a graph illustrating one example of a deformation amount of the reflecting surface 12 of the deformable mirror 10. Fig. 3 illustrates the deformation amounts of the reflecting surface 12 in a case where the voltages applied to the plurality of control electrodes 20a to 20h are set to 100 V, 200 V, 300 V, 400 V, and 500 V with the height of the reflecting surface 12 when no voltage is applied to the plurality of control electrodes 20a to 20h as a reference. The voltages applied to the plurality of control electrodes 20a to 20h are alternately switched between positive and negative in a predetermined direction (for example, the y direction), and a positive voltage is applied to the odd-numbered control electrodes 20a, 20c, 20e, and 20g, whereas a negative voltage is applied to the even-numbered control voltages 20b, 20d, 20f, and 20h. The vertical axis of the graph represents the deformation amount [nm] in the thickness direction (z direction), and the horizontal axis of the graph represents the position [mm] in the predetermined direction (y direction). In the example in Fig. 3, the widths w, in the y direction, of the plurality of control electrodes 20a to 20h are set to 2 mm, and the interval d therebetween is set to 1 mm.

As illustrated in Fig. 3, a convex portion and a concave portion on the deformed reflecting surface 12 are generated every 3 mm approximately, and it can be seen that the reflecting surface 12 can be deformed so as to correspond to the positions of the plurality of control electrodes 20a to 20h arranged at a pitch of 3 mm. According to the example in Fig. 3, the reflecting surface 12 can be deformed at a spatial frequency of 6 mm. In a conventional deformable mirror in which PZT is used as a piezoelectric element and the piezoelectric element is deformed in a direction along a reflecting surface, the spatial frequency is limited to 20-30 mm. Therefore, according to the present embodiment, the shape control with a higher spatial frequency than the conventional one can be achieved. Note that, if the pitch p of the plurality of control electrodes 20a to 20h is set to be smaller than 3 mm and set to be 1.5 mm (for example, the width w is 1 mm, and the interval d is 0.5 mm), the reflecting surface 12 can be deformed at a spatial frequency of 3 mm.

When ±500 V is applied to each of the two adjacent control electrodes 20 (for example, the control electrodes 20a and 20b), a difference in height between the convex portion and the concave portion is approximately 20 nm, and the maximum value of the deformation amount is smaller than that in a case where PZT is used as the piezoelectric material. However, such a deformation amount is sufficient to correct a shape error of approximately 5 nm (approximately 10 nm in PV).

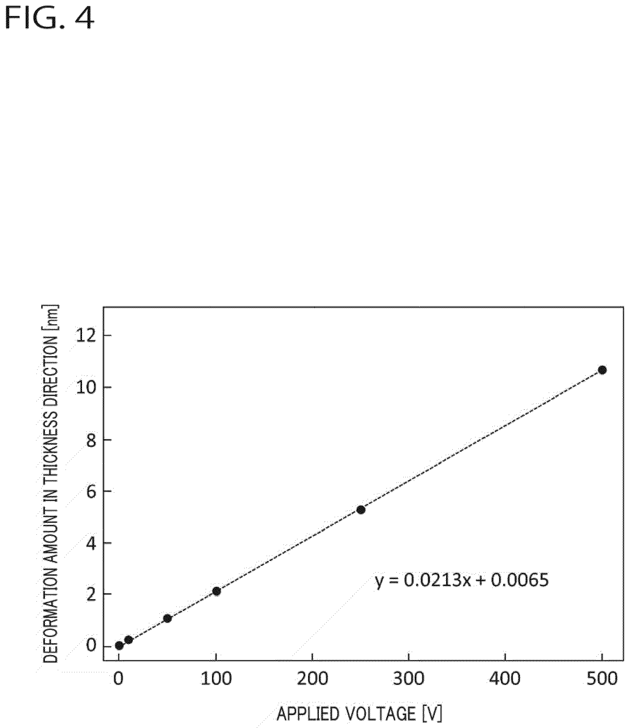

Fig. 4 is a graph illustrating one example of a relation between an applied voltage and a deformation amount of the deformable mirror 10. As illustrated in Fig. 4, there is high linearity between the applied voltage and the deformation amount. Furthermore, a hysteresis present in a piezoelectric ceramic material such as PZT is not observed, and a drift in which a deformation amount changes with the elapse of time even though an applied voltage is fixed, is not observed. Therefore, according to the deformable mirror 10 of the present embodiment, the deformation amount can be uniquely determined in accordance with the applied voltage, and the shape of reflecting surface 12 can be stably controlled with a high reproducibility.

According to the present embodiment, since the shape of reflecting surface 12 can be variably controlled while irradiating the reflecting surface 12 with the X-ray 40, the shape of the reflecting surface 12 can be adjusted later so as to be optimal in the X-ray optics in which the deformable mirror 10 is embedded. For example, by measuring the shape of the reflecting surface 12 through a pencil beam method using X-rays, it is possible to precisely measure and adjust the shape of the reflecting surface 12 on the spot in a state where the deformable mirror 10 is embedded in the X-ray optics.

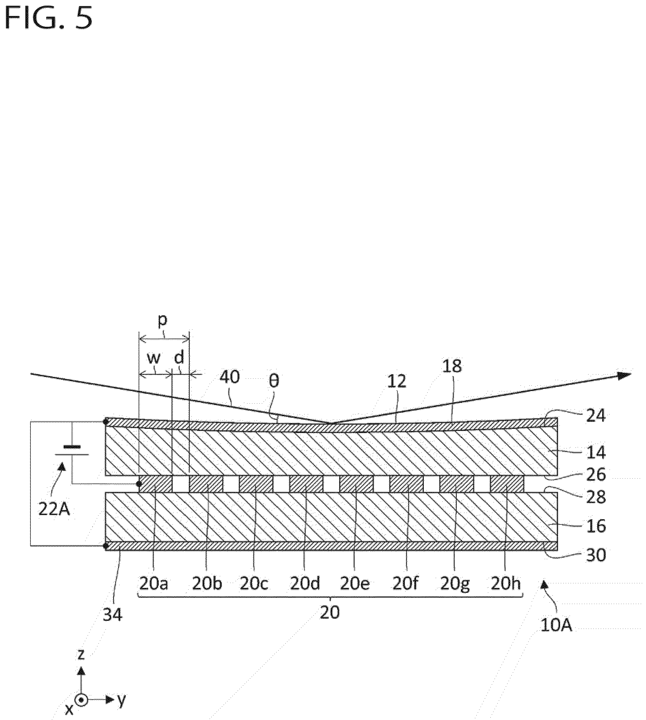

Fig. 5 is a cross-sectional view schematically illustrating a configuration of a deformable mirror 10A according to a modification. The present modification is different from the above-described embodiment in that the second substrate 16 is made of a piezoelectric material, and the backside electrode 34 is provided on the fourth surface 30 of the second substrate 16. In the present modification, the second substrate 16 is made deformable in accordance with the applied voltage and the second substrate 16 is caused to be deformed in the same manner as the first substrate 14, thereby suppressing an unintended curvature of the reflecting surface 12 due to a difference in deformation amount between the first substrate 14 and the second substrate 16. The present modification will be described focusing on differences from the above-described embodiment, while the description about the common features will be appropriately omitted.

The deformable mirror 10A includes a first substrate 14, a second substrate 16, a reflecting electrode 18, a plurality of control electrodes 20a to 20h, a power supply 22A, and a backside electrode 34.

The backside electrode 34 is provided on the fourth surface 30 of the second substrate 16. The backside electrode 34 is provided, for example, so as to cover the fourth surface 30 entirely. The backside electrode 34 is made of a metal material, and for example, nickel (Ni), chromium (Cr), copper (Cu), silver (Ag), gold (Au), or the like can be used. The backside electrode 34 can be formed using a vapor deposition method or a sputtering method. The thickness of the backside electrode 34 is not particularly limited, but is, for example, 10 nm or more and 1000 nm or less, and preferably 30 nm or more and 200 nm or less.

The power supply 22A applies a DC voltage between the reflecting electrode 18 and the control electrode 20, and applies a DC voltage between the backside electrode 34 and the control electrode 20. In the example in Fig. 5, the power supply 22A is connected so that the reflecting electrode 18 and the backside electrode 34 share a common potential. Note that, in another modification, a second power supply that applies a DC voltage between the backside electrode 34 and the control electrode 20 may be used separately from the first power supply that applies a DC voltage between the reflecting electrode 18 and the control electrode 20. That is, the first applied voltage between the reflecting electrode 18 and the control electrode 20 and the second applied voltage between the backside electrode 34 and the control electrode 20 may be individually controllable.

In the example in Fig. 5, a direction of the electric field applied to the first substrate 14 and a direction of the electric field applied to the second substrate 16 are vertically-opposite directions. For example, in a case where a positive voltage is applied to the control electrode 20, an electric field directed from the second surface 26 to the first surface 24 is applied to the first substrate 14, whereas an electric field directed from the third surface 28 to the fourth surface 30 is applied to the second substrate 16. The second substrate 16 is disposed such that the polarization direction thereof is arranged to be vertically opposite to that of the first substrate 14. By arranging the polarization directions of the first substrate 14 and the second substrate 16 to be vertically opposite, it is possible to set the deformation directions thereof in a case where electric fields directed to vertically opposite directions are applied to the first substrate 14 and the second substrate 16, to the same direction.

According to the present modification, since the structure of the deformable mirror 10A can be made symmetric in the thickness direction (for example, the z direction) with respect to the control electrode 20 as a center, it is possible to more suitably suppress the deformation of the reflecting surface 12 due to temperature change. In addition, it is possible to make the deformation amounts in the x direction, the y direction, and the z direction of the first substrate 14 and the second substrate 16 when a voltage is being applied, the same. As a result, since there is a difference between the deformation amount of the first substrate 14 and the deformation amount of the second substrate 16, it is possible to prevent the deformable mirror 10A from curving like a bimetal. According to the present modification, the shape of the reflecting surface 12 can be more stably controlled with a higher reproducibility.

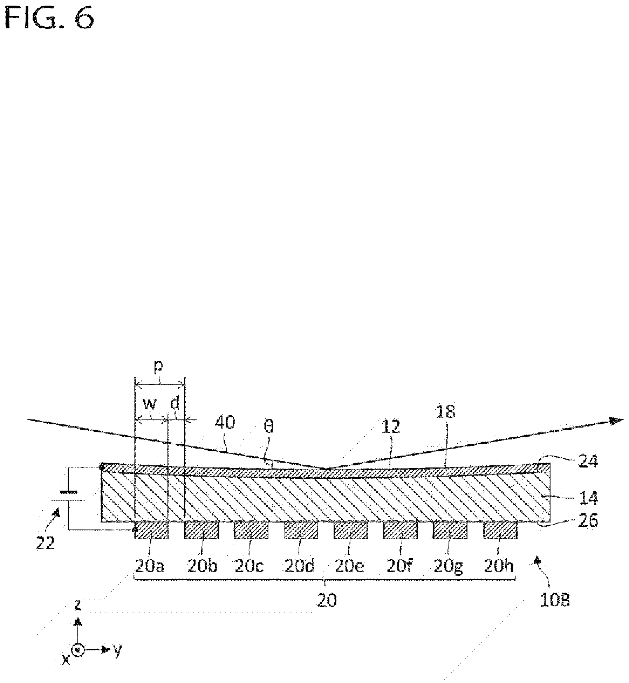

Fig. 6 is a cross-sectional view schematically illustrating a configuration of a deformable mirror 10B according to a modification. The present modification is obtained by removing the second substrate 16 from the deformable mirror 10 illustrated in Fig. 1. The deformable mirror 10B includes a first substrate 14, a reflecting electrode 18, a plurality of control electrodes 20a to 20h, and a power supply 22. The first substrate 14, the reflecting electrode 18, the plurality of control electrodes 20a to 20h, and the power supply 22 are configured in the same manner as in the above-described embodiment.

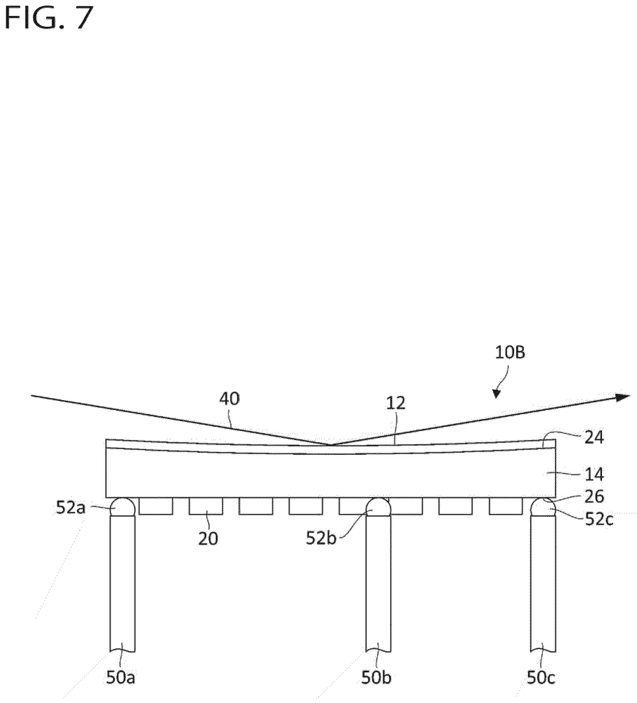

Fig. 7 is a cross-sectional view schematically illustrating a method for supporting the deformable mirror 10B. The deformable mirror 10B can be held through a three-point support using three support bodies 50a, 50b, and 50c that comes into point contact with the deformable mirror 10B. Support spherical bodies 52a, 52b, and 52c are provided at respective tips of the plurality of support bodies 50a to 50c, and each of the support sphere bodies 52a to 52c comes into point contact with the deformable mirror 10B. By using the plurality of support bodies 50a to 50c to support the deformable mirror 10B through the point contact at three points, the deformation of the deformable mirror 10B due to the point contact can be predicted with a high accuracy through a simulation such as a finite element method. Furthermore, it is possible to select three points with which the plurality of support bodies 50a to 50c come in contact such that the deformation of the deformable mirror 10B based on the simulation results in a desired shape.

In the example in Fig. 7, the reflecting surface 12 is directed upward in the vertical direction, and the plurality of support bodies 50a to 50c come in contact with the second surface 26 of the first substrate 14 or the control electrode 20 to support the deformable mirror 10B. In a case where the reflecting surface 12 is directed downward in the vertical direction, that is, in a case where the direction becomes vertically opposite to the case of Fig. 7, the plurality of support bodies 50a to 50c can come into contact with the reflecting surface 12 to support the deformable mirror 10B. In addition, when the reflecting surface 12 is directed to the side, the plurality of support bodies 50a to 50c can come into contact with the side surface of the first substrate 14 to support the deformable mirror 10B. Note that, the support method using the plurality of support bodies 50a to 50c is also applicable to the deformable mirrors 10, 10A illustrated in Fig. 1 or Fig. 5.

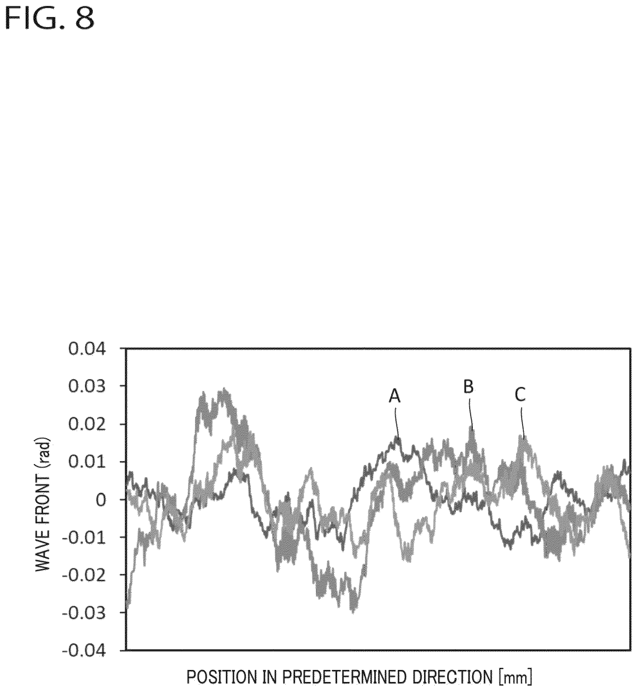

Fig. 8 is a graph illustrating the time stability of the deformable mirror 10B. Fig. 8 illustrates a wave front shape of the X-ray 40 reflected by the deformable mirror 10B having a voltage of 500 V being applied to any one of the plurality of control electrodes 20a to 20h. The obliquely incident X-ray 40 has an energy of 14.5 keV, and the deformable mirror 10B is used as an elliptic concave mirror in a Wolter III type mirror in which an elliptic concave mirror and a hyperbolic convex mirror are combined. Graph A shows a state after one hour from the voltage application, graph B shows a state after four hours from the voltage application, and graph C shows state after seven hours from the voltage application. As illustrated in Fig. 8, the temporal change of the shape of the reflecting surface of the deformable mirror 10B is extremely small, and the temporal change amount of the wave front within the measurement period is approximately 0.03 rad, which corresponds to a shape change of 0.5 Å. Therefore, the shape of the deformable mirror 10B can be precisely and stably controlled over a long period of time in which the deformable mirror 10B is used.

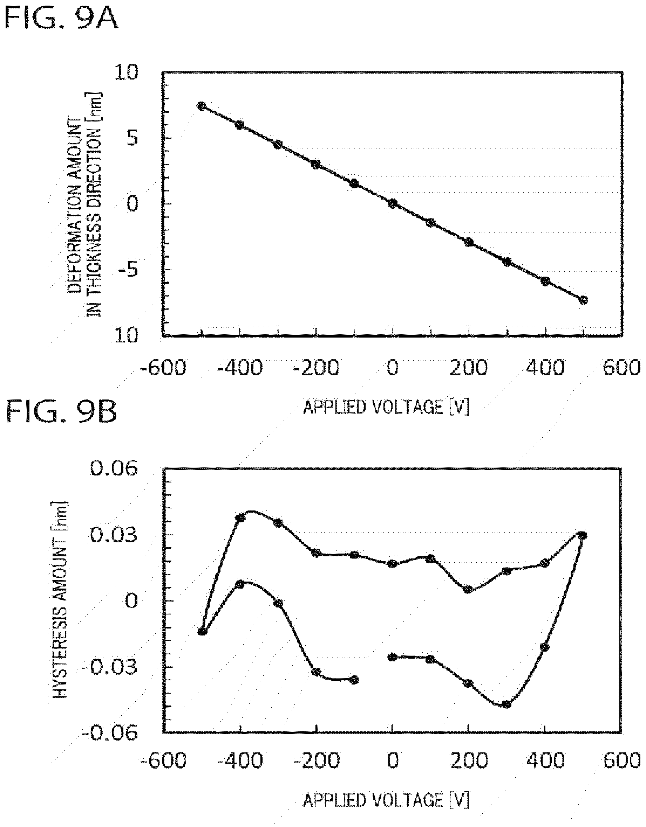

Figs. 9(a) to (b) are graphs each illustrating one example of a relation between an applied voltage and a deformation amount of the deformable mirror 10B. Fig. 9(a) illustrates the deformation amount of the reflecting surface 12 with respect to the applied voltage, and it can be seen that the deformation amount of the reflecting surface 12 linearly changes. Fig. 9(b) illustrates the hysteresis property of the deformation amount of the reflecting surface 12 when the applied voltage is changed, and illustrates a difference between the plots of Fig. 9(a) and an approximation straight line. As illustrated in Fig. 9(b), the hysteresis property of the deformation amount of the reflecting surface 12 is extremely small, and it exists only at approximately several % of the deformation amount of the reflecting surface 12. Therefore, the shape of the deformable mirror 10B can be precisely and easily controlled while pay little attention to a hysteresis property.

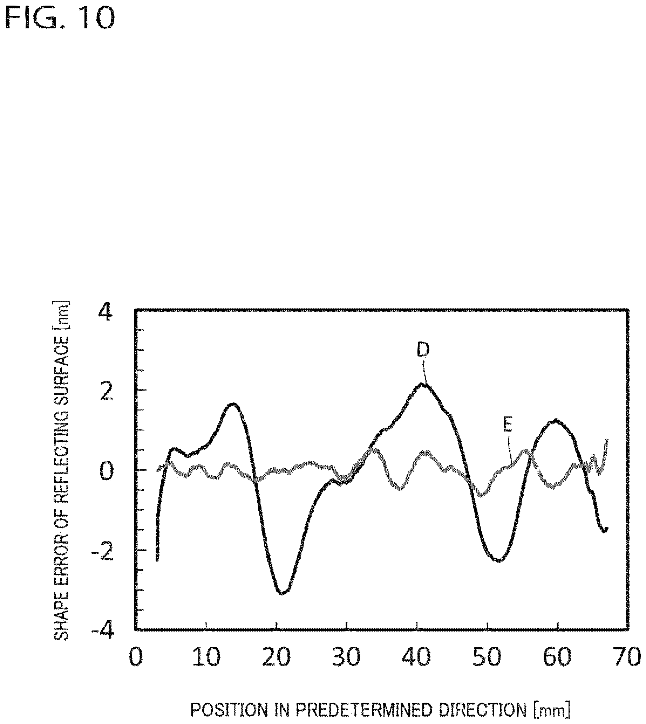

Fig. 10 is a graph illustrating one example of a shape error of the reflecting surface of the deformable mirror 10B. A graph D illustrates a shape error before the correction with no voltage being applied to the plurality of control electrodes 20a to 20h, and the shape accuracy is approximately ±2 nm (approximately 4 nm in PV). A graph E illustrates a shape error after the correction with a voltage being applied to the plurality of control electrodes 20a to 20h, and the shape accuracy of approximately ±0.5 nm (approximately 1 nm in PV) can be achieved. In a case where the energy of the X-ray 40 is 14.5 keV and the obliquely incident angle θ of the X-ray 40 is approximately 4 mrad, the shape accuracy required for the reflecting surface 12 is 0.76 nm or less in Rms. Since the shape accuracy after the correction indicated by graph E is 0.24 nm in Rms, the required accuracy can be sufficiently achieved. According to the present embodiment, the wave front correction with an accuracy exceeding the diffraction limit of the X-ray 40 can be realized, and even when the energy of the X-ray 40 is 45 keV, for example, the diffraction limit can be achieved.

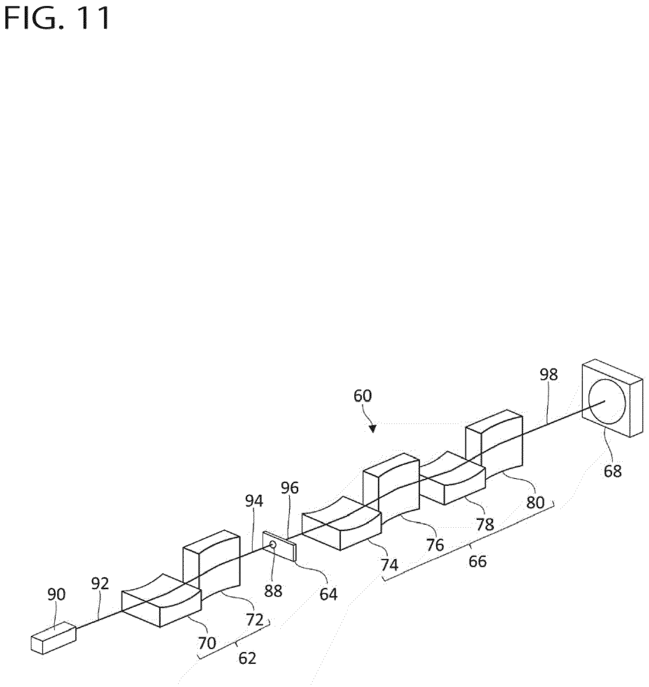

Fig. 11 is a perspective view schematically illustrating a configuration of an X-ray microscope 60 according to the embodiment. The X-ray microscope 60 is one example of an X-ray device using X-rays, and has a so-called imaging type microscope configuration. The X-ray microscope 60 includes an illumination optics 62, a sample holder 64, an imaging optics 66, and an X-ray detector 68. The X-ray microscope 60 is configured so as to irradiate a sample 88 with an X-ray 92 generated by an X-ray source 90, and to detect an enlarged image of the X-ray 96 that has transmitted through the sample 88 by the X-ray detector 68.

The X-ray source 90 generates the X-rays 92 for observing the sample 88. The type of the X-ray source 90 is not particularly limited, and an X-ray tube, a large-sized synchrotron radiation facility such as Spring-8, an X-ray free electron laser, or the like can be used. In a case of using a small-sized device such as an X-ray tube as the X-ray source, the X-ray microscope 60 may include the X-ray source 90. On the other hand, in a case of using a large-sized device such as a synchrotron radiation facility as the X-ray source 90, the X-ray microscope 60 may not include the X-ray source 90. The X-ray source 90 is configured so as to output hard X-rays of 2 keV or more, for example. The X-ray source 90 may generate monochromatic X-rays which have been monochromatized at a specific wavelength, or may generate continuous X-rays (white X-rays) including various wavelength components.

The illumination optics 62 is disposed between the X-ray source 90 and the sample holder 64. The illumination optics 62 is configured so as to focus the X-rays 92 from the X-ray source 90 on the sample holder 64. The illumination optics 62 is configured by a so-called KB (Kirkpatrick-Baez) mirror, and includes a horizontal concave mirror 70 and a vertical concave mirror 72. The horizontal concave mirror 70 and the vertical concave mirror 72 are disposed such that the normal directions of the respective reflecting surfaces thereof are orthogonal to each other. The reflecting surfaces of the horizontal concave mirror 70 and the vertical concave mirror 72 are configured by, for example, an elliptic concave surface having a focal point at the position of the sample holder 64. The illumination optics 62 may be configured by four curved mirrors similarly to the imaging optics 66 described later.

The sample holder 64 holds the sample 88 irradiated with the X-ray 94 emitted from the illumination optics 62. The sample holder 64 holds the sample 88 to be observed on an optical path of the X-ray 94. The configuration of the sample holder 64 is not particularly limited, and any configuration for fixing the position of the sample 88 can be used according to the characteristics of the sample 88. The sample holder 64 includes, for example, a stage device for adjusting the position of the sample 88 with respect to the optical path of the X-ray 94.

The imaging optics 66 is disposed between the sample holder 64 and the X-ray detector 68. The imaging optics 66 is configured so as to form an image of the X-ray 96 from the sample holder 64 on the X-ray detector 68. The imaging optics 66 is a so-called AKB (Advanced Kirkpatrick-Baez) mirror optics, and includes four curved mirrors 74, 76, 78, and 80. The imaging optics 66 is configured so as to realize, for example, an image magnification of approximately 100 times to 1,000 times.

The imaging optics 66 can be configured as, for example, a Wolter I type mirror in which a hyperbolic concave mirror and an elliptic concave mirror are combined. In this case, the first curved mirror 74 is a horizontal hyperbolic concave mirror, and has a reflecting surface configured by, for example, a concave surface with a hyperbolic curve having a focal point at the position of the sample holder 64. The second curved mirror 76 is a vertical hyperbolic concave mirror, and has a reflecting surface configured by, for example, a concave surface with a hyperbolic curve having a focal point at the position of the sample holder 64. The third curved mirror 78 is a horizontal elliptic concave mirror, and has a reflecting surface configured by, for example, an elliptic concave surface having a first focal point at the position of the X-ray detector 68 and having a second focal point shared with the first curved mirror 74. The fourth curved mirror 80 is a vertical elliptic concave mirror, and has a reflecting surface configured by, for example, an elliptic concave surface having a first focal point at the position of the X-ray detector 68 and having a second focal point shared with the second curved mirror 76.

In the example in Fig. 11, the four curved mirrors 74-80 are arranged, in the order of the horizontal hyperbolic concave mirror, the vertical hyperbolic concave mirror, the horizontal elliptic concave mirror, and the vertical elliptic concave mirror, from the sample holder 64 toward the X-ray detector 68. However, the arrangement order is not limited thereto. For example, the horizontal elliptic concave mirror may be disposed after the horizontal hyperbolic concave mirror, or the vertical elliptic concave mirror may be disposed after the vertical hyperbolic concave mirror. The imaging optics 66 can be also configured as a Wolter III type mirror in which an elliptic concave mirror and a hyperbolic convex mirror are combined. In this case, a horizontal elliptic concave mirror can be used as the first curved mirror 74, a vertical elliptic concave mirror can be used as the second curved mirror 76, a horizontal hyperbolic convex mirror can be used as the third curved mirror 78, and a vertical hyperbolic convex mirror can be used as the fourth curved mirror 80.

The X-ray detector 68 detects an X-ray 98 emitted from the imaging optics 66. The X-ray detector 68 is, for example, an X-ray camera for detecting a two-dimensional image of the X-ray 98. The configuration of the X-ray detector 68 is not particularly limited. However, for example, a direct conversion type or an indirect conversion type image sensor (CCD or CMOS sensor) can be used. In order to further increase the definition, the X-ray detector 68 may include an optical element such as a lens for enlarging a visible light image converted by a scintillator, and an image sensor for imaging the enlarged visible light image.

At least one of the illumination optics 62 and the imaging optics 66 includes the deformable mirror 10, 10A, or 10B according to the embodiment or modifications described above. At least one of the horizontal concave mirror 70 and the vertical concave mirror 72 configuring the illumination optics 62 may be configured by the deformable mirror 10, 10A, or 10B. The deformable mirror 10, 10A, or 10B may be applied only to the horizontal concave mirror 70, applied only to the vertical concave mirror 72, or applied to both of the horizontal concave mirror 70 and the vertical concave mirror 72. Furthermore, at least one of the four curved mirrors 74-80 configuring the imaging optics 66 may be configured by the deformable mirror 10, 10A, or 10B. The deformable mirror 10, 10A, or 10B may be applied to any one, two, or three of the four curved mirrors 74-80, or may be applied to all of them. By using the deformable mirror 10, 10A, or 10B for at least one of the illumination optics 62 and the imaging optics 66, it is possible to improve the characteristics of the X-ray optics while reducing a period and a cost required for manufacturing mirrors.

The deformable mirror 10, 10A, or 10B according to the present disclosure is preferably applied to the imaging optics 66 requiring a higher accuracy. In particular, it is preferable to apply the deformable mirror 10, 10A, or 10B to each of the horizontal curved mirror and the vertical curved mirror that are arranged near the sample holder 64 and serve as objective lenses in the imaging optics 66. The configuration in Fig. 11 is preferably applied to one or both of the first curved mirror 74 that is a horizontal hyperbolic concave mirror and the second curved mirror 76 that is a vertical hyperbolic concave mirror. In order to increase the resolution of the imaging optics 66, it is necessary to increase the numerical aperture of the imaging optics 66, and the shape accuracy of an objective lens that determines the numerical aperture becomes important. It is possible to improve the performance of the X-ray microscope 60 more effectively by applying the deformable mirror 10, 10A, or 10B to a curved mirror which serves as the objective lens in the X-ray optics.

The X-ray microscope 60 may further include an X-ray spectrometer (not illustrated) disposed between the X-ray source 90 and the illumination optics 62. The X-ray spectrometer is configured so as to monochromatize the X-rays 92 from the X-ray source 90. The X-ray spectrometer may be a crystal spectrometer such as a two-crystal monochromator, and may be configured such that the X-ray wavelength becomes variable by changing the crystal angle. The X-ray microscope 60 can provide XAFS (X-ray Absorption Fine Structure) imaging by making the X-ray wavelength variable. Since the X-ray microscope 60 is configured by the X-ray optics with less chromatic aberration, XAFS images with a high resolution (for example, 50 nm or less) can be provided only by simply varying the X-ray wavelength.

The deformable mirror 10, 10A, or 10B according to the present disclosure can be applied to any X-ray device, and in particular, can be applied to an X-ray optics such as a light focusing optics or an imaging optics provided in the X-ray device. Examples of the X-ray device include a scanning-type X-ray microscope and an X-ray telescope in addition to the imaging type X-ray microscope illustrated in Fig. 11.

The scanning-type X-ray microscope may include a light focusing optics for focusing X-rays on the sample holder, and at least one of X-ray mirrors configuring the light focusing optics may be the deformable mirror 10, 10A, or 10B according to the present disclosure. In a case of the scanning-type X-ray microscope, the resolution is determined by the beam size of the X-rays focused by the light focusing optics. By using the deformable mirror 10, 10A, or 10B according to the present disclosure, it is possible to improve the characteristics of the light focusing optics and improve the resolution of the scanning-type X-ray microscope. As the light focusing optics in the scanning-type X-ray microscope, the horizontal concave mirror 70 and the vertical concave mirror 72 similar to the illumination optics 62 in Fig. 11 can be used, and the deformable mirror 10, 10A, or 10B according to the present disclosure can be used as at least one of them. As the light focusing optics in the scanning-type X-ray microscope, an AKB mirror optics including four curved mirrors can be also used, and the deformable mirror 10, 10A, or 10B according to the present disclosure can be used as at least one of the four curved mirrors.

The X-ray telescope may include an imaging optics that forms an image of an X-ray from a celestial body to be observed on the X-ray detector, and at least one of X-ray mirrors configuring the imaging optics may be the deformable mirror 10, 10A, or 10B according to the present disclosure. As the imaging optics in the X-ray telescope, for example, an AKB mirror optics similar to the imaging optics 66 in Fig. 11 can be used. In a case where the sample 88 in Fig. 11 is regarded as a celestial body to be observed, it is possible to use a Wolter I type imaging optics in which parabolic concave mirrors are used as the first curved mirror 74 and the second curved mirror 76, and hyperbolic concave mirrors are used as the third curved mirror 78 and the fourth curved mirror 80. In addition thereto, it is possible to use a Wolter III type imaging optics in which parabolic convex mirrors are used as the first curved mirror 74 and the second curved mirror 76, and elliptic concave mirrors are used as the third curved mirror 78 and the fourth curved mirror 80. In these cases, the deformable mirror 10, 10A, or 10B according to the present disclosure can be used as at least one of the four curved mirrors.

The deformable mirror 10, 10A, or 10B according to the present disclosure may be used as a wave front compensation optical element in any X-ray device. In a case of being used as the wave front compensation optical element, by slightly deforming the reflecting surface 12 which is a substantially flat surface, to obtain a shape opposite to the wave front aberration of the obliquely incident X-ray 40, for example, thereby compensating for the wave front aberration of the incident X-ray 40. The X-ray in which the wave front aberration is compensated by the deformable mirror 10, 10A, or 10B may be subjected to further machining by an X-ray optical element such as a lens or a mirror, may be emitted to irradiate a sample held by the sample holder, or may be detected by the X-ray detector.

The present disclosure has been described above based on the embodiment. A person skilled in the art could understand that the present disclosure is not limited to the above embodiments, various design changes are available, and various modifications are available, and such modifications are also within the scope of the present disclosure.

### INDUSTRIAL APPLICABILITY

According to the present disclosure, it is possible to precisely adjust a reflecting surface of an X-ray mirror.

### REFERENCE SIGNS LIST

10 deformable mirror, 12 reflecting surface, 14 first substrate, 16 second substrate, 18 reflecting electrode, 20 control electrode, 22 power source, 24 first surface, 26 second surface, 28 third surface, 30 fourth surface, 40 X-ray

## Claims

1. A deformable mirror comprising:
a first substrate having a first surface and a second surface opposite to the first surface and made of a piezoelectric material;
a reflecting electrode provided in the first surface and having a reflecting surface on which an X-ray is obliquely incident;
a plurality of control electrodes arranged at intervals in a predetermined direction in the second surface; and
a power supply structured to apply a voltage between the reflecting electrode and the plurality of control electrodes.

2. The deformable mirror according to claim 1, wherein the piezoelectric material is a piezoelectric single crystal material.

3. The deformable mirror according to claim 2, wherein the piezoelectric single crystal material is lithium niobate (LN) or lithium tantalate (LT).

4. The deformable mirror according to any one of claims 1 to 3, wherein the reflecting electrode includes a reflecting layer configured from a metal material.

5. The deformable mirror according to claim 4, wherein the reflecting layer includes at least one selected from a group consisting of nickel (Ni), chromium (Cr), rhodium (Rh), platinum (Pt), and gold (Au).

6. The deformable mirror according to either claim 4 or 5, wherein the reflecting layer has a thickness of 10 nm or more and 100 nm or less.

7. The deformable mirror according to any one of claims 1 to 3, wherein the reflecting electrode includes a reflecting layer configured from a multilayer film in which a plurality of first layers configured from a first material and a plurality of second layers from a second material different from the first material are alternately laminated.

8. The deformable mirror according to claim 7, wherein
the first material contains at least one selected from a group consisting of molybdenum (Mo), rhodium (Rh), tungsten (W), and platinum (Pt), and
the second material includes at least one selected from a group consisting of beryllium (Be), carbon (C), and silicon (Si) .

9. The deformable mirror according to claim 7 or 8, wherein
each of the plurality of first layers has a thickness of 1 nm or more and 10 nm or less, and
each of the plurality of second layers has a thickness of 1 nm or more and 10 nm or less.

10. The deformable mirror according to any one of claims 7 to 9, wherein at least one of the thickness of each of the plurality of first layers and the thickness of each of the plurality of second layers varies depending on positions in a thickness direction.

11. The deformable mirror according to any one of claims 4 to 10, wherein the reflecting layer comes into contact with the first surface.

12. The deformable mirror according to any one of claims 4 to 10, wherein the reflecting electrode further includes an adhesive layer provided between the first surface and the reflecting layer.

13. The deformable mirror according to claim 12, wherein conductivity of the adhesive layer is higher than conductivity of the reflecting layer.

14. The deformable mirror according to claim 12, wherein conductivity of the reflecting layer is higher than conductivity of the adhesive layer.

15. The deformable mirror according to any one of claims 1 to 14, further comprising a second substrate having a third surface to be bonded to the plurality of control electrodes.

16. The deformable mirror according to claim 15, wherein the second substrate is made of a piezoelectric material identical to that of the first substrate.

17. The deformable mirror according to claim 16, wherein
the second substrate has a fourth surface opposite to the third surface,
the deformable mirror further comprises a backside electrode provided in the fourth surface, and
the power source applies a voltage between the backside electrode and the plurality of control electrodes.

18. The deformable mirror according to any one of claims 1 to 17, wherein the reflecting surface has a curvature at least in the predetermined direction.

19. An X-ray device comprising:
an X-ray optics including the deformable mirror according to any one of claims 1 to 18; and
an X-ray detector structured to detect an X-ray emitted from the X-ray optics.

20. An X-ray device comprising:
an X-ray optics including the deformable mirror according to any one of claims 1 to 18; and
a sample holder structured to hold a sample to be irradiated with an X-ray emitted from the X-ray optics.
